# EUROPÄISCHE PATENTSCHRIFT

(11) **EP 3 445 613 B1**
(45) Veröffentlichungstag und Bekanntmachung des Hinweises auf die Patenterteilung: **24.06.2020**
(21) Anmeldenummer: 17724733.5
(22) Anmeldetag: 03.04.2017
(51) Int. Cl.: B60R 9/10, B62B 5/00

(54) **VERFAHREN ZUM BELADEN EINES AN DER ANHÄNGERKUPPLUNG EINES KRAFTFAHRZEUGES LÖSBAR BEFESTIGTEN FAHRRADTRÄGERS MIT WENIGSTENS EINEM FAHRRAD SOWIE VERFAHREN ZUR ENTNAHME DES FAHRRADES AUS DEM FAHRRADTRÄGER UND FAHRRADTRÄGER ZUR ANWENDUNG DER VERFAHREN**
METHOD FOR LOADING AT LEAST ONE BICYCLE ONTO A BICYCLE CARRIER DETACHABLY SECURED ON THE TRAILER COUPLING OF A MOTOR VEHICLE, AND METHOD FOR REMOVING THE BICYCLE FROM THE BICYCLE CARRIER, AND BICYCLE CARRIER FOR USING THE METHOD
PROCÉDÉ DE CHARGEMENT D'AU MOINS UN VÉLO SUR UN PORTE-VÉLOS FIXÉ DE MANIÈRE AMOVIBLE À L'ATTELAGE DE REMORQUE D'UN VÉHICULE AUTOMOBILE AINSI QUE PROCÉDÉ POUR RETIRER LE VÉLO DU PORTE-VÉLOS ET PORTE-VÉLOS POUR LA MISE EN UVRE DU PROCÉDÉ

(30) Priorität: 22.04.2016 DE 102016107503
(43) Veröffentlichungstag der Anmeldung: 27.02.2019
(73) Patentinhaber: Stockel, Jürgen, 48691 Vreden (DE)
(72) Erfinder: Stockel, Jürgen, 48691 Vreden (DE)
(74) Vertreter: Dr. Binder & Binder GbR
(86) Internationale Anmeldenummer: PCT/DE2017/100257
(87) Internationale Veröffentlichungsnummer: WO 2017/182029

(56) Entgegenhaltungen:
- CA-A1- 2 739 693
- DE-U1-202010 012 542
- GB-A- 2 273 273
- US-A1- 2009 309 330

## Beschreibung

Die Erfindung betrifft ein Verfahren zum Beladen eines an der Anhängerkupplung eines Kraftfahrzeuges lösbar befestigten Fahrradträgers mit wenigstens einem Fahrrad, Verfahren zur Entnahme des mindestens einen Fahrrades aus dem Fahrradträger und einen Fahrradträger zur Anwendung der genannten Verfahren.

Fahrradträger erfreuen sich zunehmender Beliebtheit, weil mit dem Transport eines Fahrrades mit einem Kraftfahrzeug der Aktionsradius für ausgiebige Fahrradtouren zunimmt. Mit Hinblick auf die sich ändernde Altersstruktur der Bevölkerung ist zunehmend festzustellen, dass die Beladung eines auf der Anhängerkupplung eines Kraftfahrzeuges befestigten Fahrradträgers insbesondere für ältere Personen immer problematischer wird, weil das Fahrrad auf ein bestimmtes Höhenniveau angehoben werden muss. Hierzu reichen oft die vorhandenen körperlichen Kräfte nicht mehr aus. Hinzu kommt außerdem, dass dieser Personenkreis zunehmend Fahrräder mit einem Elektromotor besitzt und diese durch das erhöhte Eigengewicht des Rahmens, den vorhandenen Akkumulator und den integrierten Elektromotor ein wesentlich höheres Gewicht aufweisen, als herkömmliche Fahrräder.

Zur Überwindung dieser Schwierigkeiten sind bereits absenkbare Fahrradträger bekannt.
So geht beispielsweise aus der US 5,730,345 ein Fahrradträger hervor, der auf der Anhängerkupplung eines Kraftfahrzeuges befestigt werden kann und aus einem Rahmen besteht, der über eine parallelogrammartig gestaltete Hebelmechanik angehoben beziehungsweise abgesenkt werden kann, wobei die parallelogrammartigen Hebelarme um Gelenke schwenkbar ausgeführt sind. Auf diese Weise ist der Fahrradträger zwischen einer Transportposition und einer Beladeposition schwenkbar. Zur Unterstützung der Hubbewegung des Fahrradträgers werden hierbei zudem Gasdruckfedern eingesetzt. Als Beladeposition offenbart die Druckschrift jedoch eine Höhe, die immer noch das Anheben des Fahrrades erfordert und damit die eingangs geschilderten Schwierigkeiten zwar verbessert, jedoch nicht vollständig beseitigt.

Eine andere Lösung geht aus der DE 20 2012 012 566 U1 hervor, in der ein zur Befestigung auf der Anhängerkupplung eines Kraftfahrzeuges geeigneter Heckträger beschrieben wird, an dem ein zusätzlicher Radträger befestigt ist oder mit dem ein derartiger Radträger verbunden werden kann. Der in seiner Höhe einstellbare Radträger erlaubt dabei die Befestigung des Heckträgers an der Anhängerkupplung des Kraftfahrzeuges, ohne den Heckträger anheben zu müssen. Nach dem Lösen des Heckträgers von der Anhängerkupplung wird der Radträger als fahrbarer Untersatz verwendet, so dass der auf diese Weise definierte Transportzustand zum Abtransport der auf dem Heckträger angeordneten Lasten genutzt werden kann. Diese Lösung ist insgesamt als Fahrradträger wenig geeignet. Zudem müssen die Fahrräder auch hierbei zumindest auf das Höhenniveau des Heckträgers angehoben werden.

Die Druckschrift US 2009 / 0309330 A1 beschreibt ein Verfahren zum Beladen einer an ein Fahrzeug ankoppelbaren Ladefläche, beispielsweise zum Beladen mit einem Motorrad. Die Ladefläche kann zum Beladen in vertikaler Richtung abgesenkt und für die Fahrt wieder angehoben werden. An der Ladefläche sind Räder befestigt, welche zum Abstützen der Ladefläche auf dem Boden dienen.

Der Erfindung liegt die Aufgabe zugrunde, ein Verfahren zum Beladen eines an der Anhängerkupplung eines Kraftfahrzeugs lösbar befestigten Fahrradträgers sowie wenigstens ein Verfahren zur Entnahme wenigstens eines Fahrrades aus dem an der Anhängerkupplung des Kraftfahrzeuges lösbar befestigten Fahrradträgers bereitzustellen und einen Fahrradträger anzugeben der zur Umsetzung dieser Verfahren geeignet ist und bei dem der Kraftaufwand zur Be- und Entladung des Fahrradträgers gegenüber bekannten Lösungen reduziert oder vermieden wird.

Die Erfindung löst diese Aufgabenstellung mit den Merkmalen der unabhängigen Patentansprüche 1, 2, 3 und 4.
Weitere Ausgestaltungen der Erfindung sind Gegenstand der Unteransprüche.

Ein Verfahren zum Beladen eines an der Anhängerkupplung eines Kraftfahrzeuges lösbar befestigten Fahrradträgers mit wenigstens einem Fahrrad, bei dem der Fahrradträger einen Rahmen aufweist, der mittels einer durch wenigstens eine Gasdruckfeder unterstützten Hebelmechanik in Relation zu einer am Fahrradträger vorhandenen Kupplungseinrichtung zwischen einer Transportposition und einer Beladeposition schwenkbar ausgeführt ist, weist folgende Verfahrensschritte auf:
- lösbare Fixierung eines mit Rädern oder Rollen ausgestatteten Transportwagens unterhalb des Fahrradträgers,
- Annäherung des Fahrradträgers mit dem Transportwagen an die Anhängerkupplung des Kraftfahrzeuges,
- Justierung der Kupplungseinrichtung auf ein der Anhängerkupplung entsprechendes Höhenniveau, sodass die Kupplungseinrichtung mit ihrer Kupplungsöffnung durch horizontales Verfahren des mit dem Transportwagen verbundenen Fahrradträgers die Anhängerkupplung unmittelbar aufnimmt,
- Fixierung des Fahrradträgers an der Anhängerkupplung mittels eines vorhandenen Klemm- und/oder Schraubmechanismus,
- Lösen und Entfernen des Transportwagens vom Fahrradträger,
- Absenken des Rahmens mittels der Hebelmechanik bis auf den Untergrund,
- Einschieben des mindestens einen Fahrrades in die hierfür am Fahrradträger vorhandene, wenigstens eine Radaufnahme und Fixierung des Fahrrades in beziehungsweise an dem Fahrradträger,
- Anhebung des Rahmens des Fahrradträgers in die Transportposition mittels der vorhandenen Hebelmechanik.

Das erfindungsgemäße Verfahren weist die wesentlichen Merkmale auf, dass der Fahrradträger vollständig, bis auf den Untergrund abgesenkt werden kann, was eine erhebliche Erleichterung bei der Beladung mit einem Fahrrad beziehungsweise bei der Entnahme des Fahrrades aus dem Fahrradträger darstellt. Diese neuartige Vorgehensweise stellt eine erhebliche Verbesserung gegenüber bekannten Lösungen dar, weil der erforderliche Kraftaufwand praktisch gegen null geht und damit auch ältere Personen den Fahrradträger mit den genannten Merkmalen problemlos nutzen können. Das Fahrrad wird folglich auf sehr einfache Weise in die Radaufnahme des Fahrradträgers eingeschoben beziehungsweise aus diesem heraus gefahren. Ein weiterer, sehr wesentlicher Vorteil des beschriebenen Verfahrens besteht darüber hinaus darin, dass der gesamte Fahrradträger nach einer einmaligen Justierung stets auf das Höhenniveau der Anhängerkupplung des zum Einsatz kommenden Kraftfahrzeuges eingestellt ist und folglich die Möglichkeit besteht, den gesamten Fahrradträger auf einfache Weise an die Anhängerkupplung anzunähern und auf diesen aufzuschieben, ohne dass der Fahrradträger angehoben oder abgesenkt werden muss. Der unterhalb des Fahrradträgers angeordnete Transportwagen erleichtert diesen Vorgang in erheblichem Maße, weil die darin vorhandenen Rollen oder Räder die Fortbewegung des Fahrradträgers extrem einfach gestalten. Da der Transportwagen lösbar mit dem Fahrradträger verbunden wird, kann er während der Fahrt mit dem Kraftfahrzeug vom Fahrradträger entfernt werden, so dass sich dadurch eine Gewichtsersparnis einstellt. Die baulichen Maße des Transportwagens können dabei sehr gering gehalten werden, so dass er auch während der Fahrt mit dem Kraftfahrzeug mitgenommen werden kann. Maßgeblich ist bei der Gestaltung des Transportwagens lediglich, dass dieser so viele Räder oder Rollen aufweist, dass ein problemloser Transport des Fahrradträgers möglich ist.

Ein erstes Verfahren zur Entnahme wenigstens eines Fahrrad aus einem an der Anhängerkupplung eines Kraftfahrzeuges lösbar befestigten Fahrradträger, bei dem der Fahrradträger einen Rahmen aufweist, der mittels einer durch wenigstens eine Gasdruckfeder unterstützten Hebelmechanik in Relation zu einer am Fahrradträger vorhandenen Kupplungseinrichtung zwischen einer Transportposition und einer Entnahmeposition schwenkbar ausgeführt ist, weist folgende Verfahrensschritte auf:
- Absenken des Rahmens des Fahrradträgers mittels der Hebelmechanik bis auf den Untergrund,
- Lösen und Entfernen des mindestens einen Fahrrades aus einer wenigstens einen hierfür am Fahrradträger vorhandenen Radaufnahme,
- Anheben des Rahmens des Fahrradträgers mittels der Hebelmechanik auf ein Höhenniveau, das die lösbare Fixierung eines mit Rädern oder Rollen ausgestatteten Transportwagens unterhalb des Fahrradträgers ermöglicht,
- Absenkung des Rahmens des Fahrradträgers mit dem Transportwagen auf den Untergrund,
- Lösen und Entfernung des Fahrradträgers mit dem Transportwagen von der Anhängerkupplung des Kraftfahrzeuges, wobei der Klemm- und/oder Schraubmechanismus geöffnet und die an dem Fahrradträger vorhandene Kupplungseinrichtung durch horizontales Verfahren von der Anhängerkupplung getrennt wird.

Auch bei dem erfindungsgemäßen Verfahren zur Entnahme des Fahrrades aus dem Fahrradträger ist es von maßgeblicher Bedeutung, dass der Fahrradträger zunächst bis auf den Untergrund abgesenkt werden kann, weil dadurch die Entnahme des Fahrrades durch einfaches Herausschieben aus dem Fahrradträger möglich wird. Das bisher erforderliche Herausheben des Fahrrades aus dem Fahrradträger entfällt damit vollständig. Nach der sich anschließenden Montage des Transportwagens unter dem Fahrradträger kann der gesamte Fahrradträger problemlos von der Anhängerkupplung entnommen und zur Aufbewahrung abtransportiert werden. Dabei kann der Transportwagen unter dem Fahrradträger verbleiben, bis er wieder zum Einsatz kommt.

Ein weiteres Verfahren zur Entnahme eines ein Fahrrad aufnehmenden Fahrradträgers von der Anhängerkupplung eines Kraftfahrzeuges, bei dem der Fahrradträger einen Rahmen aufweist, der mittels einer durch wenigstens eine Gasdruckfeder unterstützten Hebelmechanik in Relation zu einer am Fahrradträger vorhandenen Kupplungseinrichtung zwischen einer Transportposition und einer Entnahmeposition schwenkbar ausgeführt ist, weist folgende Verfahrensschritte auf:
- Absenken des Rahmens des Fahrradträgers mittels der Hebelmechanik auf ein Höhenniveau, das die lösbare Fixierung eines mit Rädern oder Rollen ausgestatteten Transportwagens unterhalb des Fahrradträgers ermöglicht,
- Absenkung des Rahmens des Fahrradträgers mit dem Transportwagen auf den Untergrund,
- Lösen eines Klemm- und/oder Schraubmechanismus und Entfernen des Fahrradträgers mit dem wenigstens einen darin aufgenommenen Fahrrad und dem unter dem Fahrradträger angeordneten Transportwagen von der Anhängerkupplung des Kraftfahrzeuges, wobei die an dem Fahrradträger vorhandene Kupplungseinrichtung durch horizontales Verfahren von der Anhängerkupplung getrennt wird.

Im Unterschied zu dem zuvor geschilderten Verfahren der Entnahme wenigstens eines Fahrrades aus dem Fahrradträger wird hierbei der Transportwagen unmittelbar unter dem Fahrradträger belassen, so dass der Fahrradträger zusammen mit dem mindestens einen darauf montierten Fahrrad abtransportiert werden kann und somit für Aufbewahrungszwecke des Fahrrades zur Verfügung steht. Mithin sind bei diesem komfortablen Verfahren noch weniger Arbeitsschritte erforderlich, um dem Fahrradträger mitsamt dem darauf montierten Fahrrad vom Kraftfahrzeug zu lösen beziehungsweise ihn bei einem späteren erneuten Gebrauch wieder an der Anhängerkupplung zu befestigen.

Ein Fahrradträger zur Anwendung der vorstehend geschilderten Verfahren ist erfindungsgemäß dadurch gekennzeichnet, dass der Fahrradträger einen Rahmen aufweist, an dem eine durch wenigstens eine Gasdruckfeder unterstützte, schwenkbar ausgeführte, parallelogrammartige Hebelmechanik angeordnet ist, mittels derer der Rahmen von einer Transportposition in eine Belade- oder Entnahmeposition und umgekehrt in Relation zu einer Kupplungseinrichtung bewegbar und der Fahrradträger mittels einer Spanneinheit oder eines Schnapp-, Rast- oder Klemmmechanismus zu Transportzwecken lösbar mit einem mit Rädern oder Rollen ausgestatteten Transportwagen koppelbar ist.

Maßgebliches Kriterium des Fahrradträgers ist dabei nicht nur die Möglichkeit, dass dieser die Absenkung bis auf den Untergrund ermöglicht und damit das Be- und Entladen mit einem Fahrrad wesentlich erleichtert, sondern darüber hinaus auch die Verbindung mit einem Transportwagen, der zur Bewegung des gesamten Fahrradträgers nutzbar ist. Dabei kann der Transportwagen lösbar mit dem Fahrradträger verbunden sein, wobei nicht ausgeschlossen ist, dass der Transportwagen während der Fahrt mit dem Kraftfahrzeug unterhalb des Fahrradträgers angeordnet bleibt. Von Vorteil ist hierbei insbesondere, dass der Fahrradträger zusammen mit dem Transportwagen abtransportiert und sogar mit dem darauf montierten Fahrrad an geeigneter Stelle, also beispielsweise in einer Garage, aufbewahrt werden kann. Der bislang als störend empfundene Aufwand, einen Fahrradträger mit einem Fahrrad zu bestücken oder das Fahrrad von dem Fahrradträger zu entnehmen wird durch die erfindungsgemäße Lösung extrem vereinfacht und damit verbessert.

Gemäß einer ersten Ausgestaltung des Fahrradträgers wird vorgeschlagen, dass die Kupplungseinrichtung eine zur Anhängerkupplung des Kraftfahrzeuges passende Kupplungsöffnung mit einem Klemm- und/oder Schraubmechanismus aufweist. Dabei ist es wesentlich zu erkennen, dass die Kupplungsöffnung eine Geometrie aufweist, die das zuvor beschriebene, horizontale Aufschieben des mit dem Transportwagen ausgestatteten Fahrradträgers auf die Anhängerkupplung ermöglicht. Anders ausgedrückt wird der Fahrradträger mit dem Transportwagen an die Anhängerkupplung herangefahren, so dass die Anhängerkupplung in die Kupplungsöffnung eingleitet und anschließend lediglich mittels des Klemm- und/oder Schraubmechanismus in an sich bekannter Weise fixiert werden muss.

Um das wenigstens eine Fahrrad sicher in dem Fahrradträger aufbewahren zu können ist es von Vorteil, wenn der Fahrradträger Radaufnahmen zur Fixierung der Räder eines in dem Fahrradträger aufgenommenen Fahrrades aufweist. Die Radaufnahmen können dabei als über einen Teil oder die gesamte Breite des Fahrradträgers sich erstreckende Führungsschienen ausgeführt sein, in die das Fahrrad lediglich eingeschoben wird. In an sich bekannter Weise können diese Radaufnahmen auch schalenförmig ausgeführt sein.

Viele derzeit bekannte Fahrradträger weisen Radaufnahmen auf, die mit einem Spannriemen versehen sind, der über die Felge des Rades des Fahrrades geführt und auf der gegenüberliegenden Seite zu seiner Befestigung in eine geeignete Aufnahme oder Lasche eingefädelt und dort fixiert werden muss. Dabei kommt es häufig vor, dass die Hände durch den am Fahrrad vorhandenen Schmutz verunreinigt werden, was vom Anwender als störend empfunden wird. Eine Weiterbildung der Erfindung sieht deshalb vor, dass die Radaufnahmen jeweils einen als Nocken- oder Kniehebel ausgeführten Schnellspannhebel zur Fixierung der Räder eines in dem Fahrradträger aufgenommenen Fahrrades aufweisen. Durch den Schnellspannhebel wird die Felge des Rades des Fahrrades unmittelbar oder über einen zusätzlichen Riemen fixiert, so dass ein manueller Kontakt mit der Felge und damit die zuvor erwähnte Verschmutzung der Hände entfällt.

Ein weiteres Bestreben bei der Entwicklung des erfindungsgemäßen Fahrradträgers bestand darin, diesen möglichst kompakt und Platz sparend auszuführen. Eine kompakte Bauweise verbessert die Möglichkeiten der Aufbewahrung des Fahrradträgers, wenn dieser nicht gebraucht wird. Hierfür geht ein sehr vorteilhafter Vorschlag der Erfindung dahin, dass der Rahmen des Fahrradträgers aus einem Zentralrahmen und wenigstens einem, bevorzugt jedoch zwei seitlich des Zentralrahmens zwischen einer horizontalen und einer vertikalen Position schwenkbar an diesem angeordneten Seitenrahmen besteht. Diese Lösung hat zur Folge, dass der oder die Seitenrahmen aus der für den Transport eines Fahrrades geeigneten horizontalen Stellung in eine vertikale Position verbracht werden kann beziehungsweise können. Dadurch reduzieren sich die Abmessungen des erfindungsgemäßen Fahrradträgers in erheblichem Maße, was zu der erwähnten Platzeinsparung bei dessen Aufbewahrung führt. Es bedarf an dieser Stelle natürlich keiner besonderen Erwähnung, dass das Zusammenklappen des Fahrradträgers in der zuvor beschriebenen Weise nur dann möglich ist, wenn sich kein Fahrrad auf dem Fahrradträger befindet.

Der eingangs bereits geschilderten Problematik, dass der erforderliche Kraftaufwand für die Beladung oder Entladung eines Fahrradträgers insbesondere für ältere Personen oft schwierig aufzubringen ist, kann durch eine weiterführende Lösung der Erfindung gelöst werden, die darin besteht, dass bei dem faltbaren Fahrradträger mit einem Zentralrahmen und wenigstens einem seitlich daran befestigten und schwenkbar am Zentralrahmen angeordneten Seitenrahmen zur Unterstützung der Schwenkbewegung des oder der Seitenrahmen je Seitenrahmen mindestens eine Gasdruckfeder vorhanden ist. Vorzugsweise werden natürlich mehrere Gasdruckfedern eingesetzt, um das gesamte System möglichst leichtgängig zu machen.

Zur Verbesserung der Einführung eines Fahrrades in den Fahrradträger geht eine weiterbildende Maßnahme der Erfindung dahin, dass der Fahrradträger auf seiner dem Kraftfahrzeug abgewandten Rückseite und/oder mittig zwischen zwei benachbart zueinander angeordneten Radaufnahmen einen schwenkbar gelagerten Stützarm aufweist. Der Stützarm wird während des Transports des Fahrrades zur Fixierung desselben genutzt. Deine Schwenkbarkeit erlaubt die problemlose Einführung oder Entnahme des Fahrrades. Hierbei bieten sich einfache Möglichkeiten, indem der Stützarm zum Beispiel um eine Achse, also gelenkartig schwenkbar gelagert ist. Federn oder Gasdruckfedern können die Beweglichkeit beziehungsweise die Rückstellbewegung des Stützarmes dabei zusätzlich unterstützen.

Eine weitere, sehr vorteilhafte Ausgestaltung der Erfindung besteht darüber hinaus darin, dass der Fahrradträger auf seiner dem Kraftfahrzeug abgewandten Rückseite einen Griff aufweist. An dem Griff kann der Fahrradträger in einem von der Anhängerkupplung des Kraftfahrzeuges gelösten Transportzustand von Hand erfasst und in vereinfachter Weise bewegt werden.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen jeweils lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde.

Dies bedeutet jedoch nicht, dass derartige Bauteile bei einer erfindungsgemäßen Lösung nicht vorhanden sind.
Es zeigt:
- Figur 1:: eine erste Ausführung eines Fahrradträgers in einer abgesenkten Position mit einem Transportwagen,
- Figur 2:: einen Transportwagen zur Befestigung unterhalb des Fahrradträgers als separates Einzelteil,
- Figur 3:: ausschnittsweise und beispielhaft den Bereich der Verbindung zwischen dem Fahrradträger und dem Transportwagen,
- Figur 4:: den Fahrradträger aus Figur 1 in einer bis auf den Untergrund abgesenkten Position und ohne Transportwagen,
- Figur 5:: den Fahrradträger aus den Figuren 1 und 4 in einer angehobenen Position,
- Figur 6:: eine Ausführungsvariante eines Fahrradträgers mit zwei schwenkbaren Seitenrahmen,
- Figur 7:: ausschnittsweise den Bereich einer Kupplungseinrichtung eines Fahrradträgers von der Seite der Anhängerkupplung her betrachtet,
- Figur 8:: eine Explosivdarstellung eines Klemm- und/oder Schraubmechanismus ohne die Kupplungseinrichtung,
- Figur 9:: einen Fahrradträger in einer Seitenansicht mit einem Stützarm
- und Figur 10:: den Fahrradträger aus Figur 9 mit einem seitlich verschwenkten Stützarm.

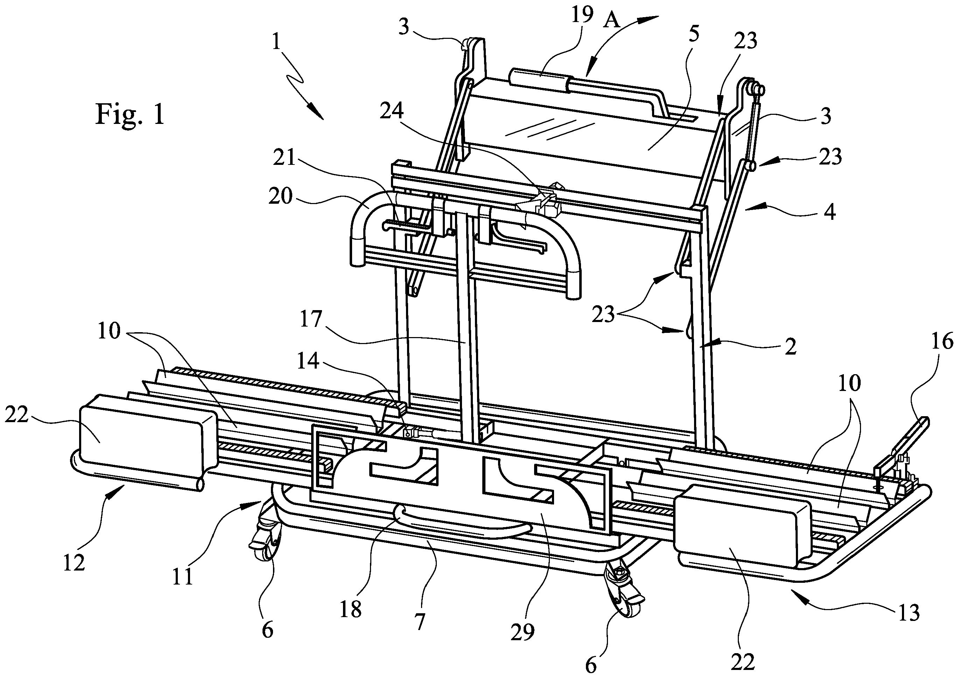

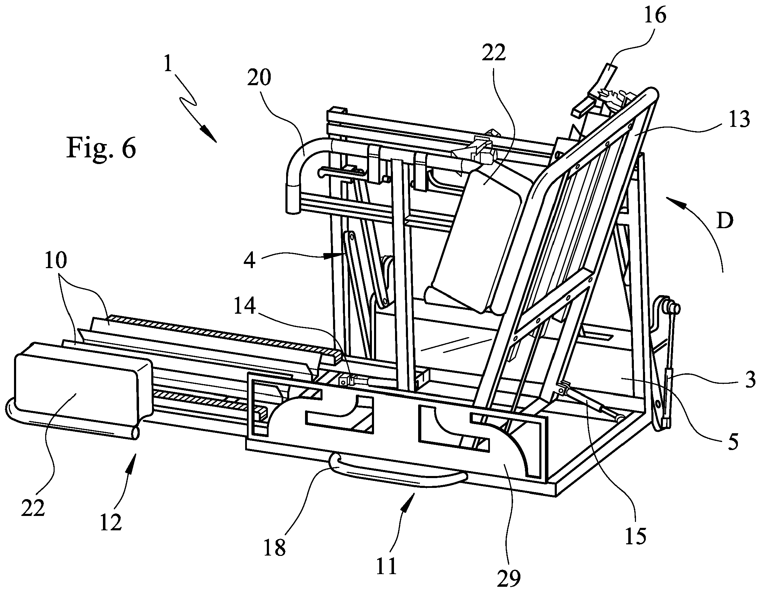

Die Figur 1 zeigt eine erste Ausführung eines Fahrradträgers 1 in einer abgesenkten Position mit einem unterhalb des Fahrradträgers 1 lösbar an diesem befestigten Transportwagen 7. Der Transportwagen 7 weist dabei mehrere Räder 6 auf, so dass durch die Kombination des Transportwagens 7 mit dem Fahrradträger 1 ein problemloser Transport des Fahrradträgers 1 oder des Fahrradträgers 1 zusammen mit mindestens einem darauf montierten Fahrrad möglich wird. Der Fahrradträger 1 besteht aus einem Rahmen 2, der schwenkbeweglich über eine Hebelmechanik 4 mit einer Kupplungseinrichtung 5 verbunden ist. Zur Erleichterung der Schwenkbewegung ist die Hebelmechanik 4 darüber hinaus mit mehreren Gasdruckfedern 3 gekoppelt. Bei dem in Figur 1 gezeigten Beispiel weist die Hebelmechanik 4 beidseitig je eine Gasdruckfeder 3 auf. Die Gasdruckfedern 3 und die einzelnen Hebelarme der Hebelmechanik 4 sind jeweils über Gelenke 23 miteinander gekoppelt. An der Kupplungseinrichtung 5 ist ferner ein Klemmhebel 19 vorhanden, der zur Bedienung eines in der Figur 1 nicht erkennbaren Klemm- und/oder Schraubmechanismus 9 dient, wozu der Klemmhebel 19 in Richtung des Doppelpfeils A bewegbar ist. Der mit dem Transportwagen 7 verbundene Teil des Rahmens 2 besteht in einer im Zusammenhang mit der Beschreibung der Figur 6 noch detaillierter ausgeführten Weise aus einem mittigen Zentralrahmen 11, der seitlich jeweils von einem Seitenrahmen 12 beziehungsweise 13 begrenzt wird. Die Besonderheit besteht hierbei darin, dass die Seitenrahmen 12, 13 jeweils schwenkbar mit dem Zentralrahmen 11 verbunden sind, was zur Folge hat, dass diese Seitenrahmen 12, 13 von der in der Figur 1 gezeigten, horizontalen Position in eine annähernd vertikale Position verschwenkt werden können. Dadurch ist die Aufbewahrung des Fahrradträgers 1 insgesamt sehr Platz sparend möglich. Zur Erleichterung der Verstellbewegung der Seitenrahmen 12, 13 dienen auch in diesem Fall Gasdruckfedern 14 und 15. Der Rahmen 2 weist ferner in an sich bekannter Weise Radaufnahmen 10 auf, deren schalenförmige Ausführung die Einführung der Räder eines Fahrrades ermöglichen, so dass das Fahrrad in den Radaufnahmen 10 fixiert werden kann. Zwischen den Radaufnahmen 10 ist bei dem in Figur 1 gezeigten Fahrradträger 1 ein Stützarm 17 aufrecht stehend angeordnet, an dem das wenigstens eine Fahrrad befestigt werden kann. Der Stützarm 17 ist zur Erleichterung der Einführung des Fahrrades in die Radaufnahmen 10 um eine Achse schwenkbar ausgeführt und kann sowohl in der dargestellten, vertikalen Position, als auch in der verschwenkten Position mittels der Handhebel 21 und je einem mit den Handhebeln 21 verbundenen Spannmechanismus fixiert beziehungsweise zum Verschwenken gelöst werden. Die Handhebel 21 sind dabei an einem Bügel 20 des Stützarmes 17 befestigt, der ergänzend zu einem Griff 18 den Transport des Fahrradträgers 1 zusätzlich vereinfacht. Der Griff 18 befindet sich dabei auf der der Anhängerkupplung des Kraftfahrzeugs abgewandten Rückseite des Fahrradträgers 1. Zur Fixierung der Räder des Fahrrades ist in Figur 1 beispielhaft ein Schnellspannhebel 16 gezeigt, der hierbei als Nockenhebel ausgeführt ist und eine verschmutzungsfreie Fixierung Rades des Fahrrades in der Radaufnahme ermöglicht. Neben dem Schnellspannhebel 16 wird das Fahrrad mit Hilfe eines Fahrradklemmhalters 24 fixiert, der rahmenseitig am Fahrrad angesetzt wird. Darüber hinaus verfügt der gezeigte Fahrradträger 1 natürlich über die für seinen Einsatz im Straßenverkehr erforderlichen Rücklichter 22 beziehungsweise über einen Kennzeichenhalter 29.

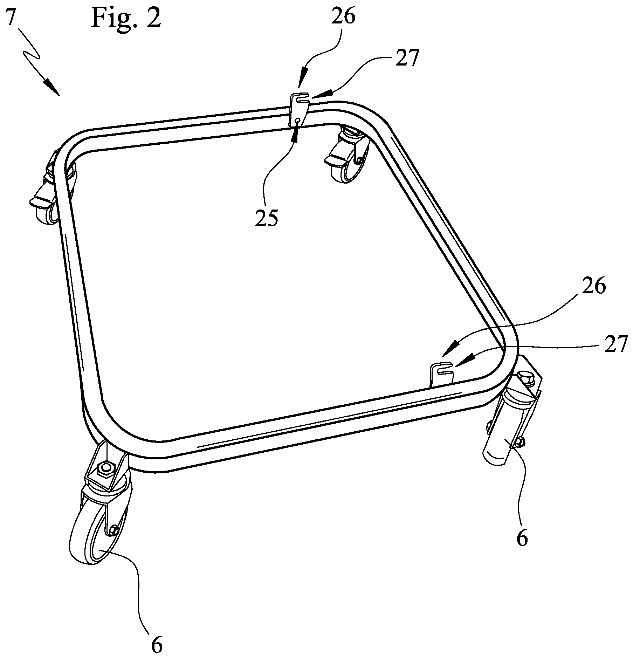

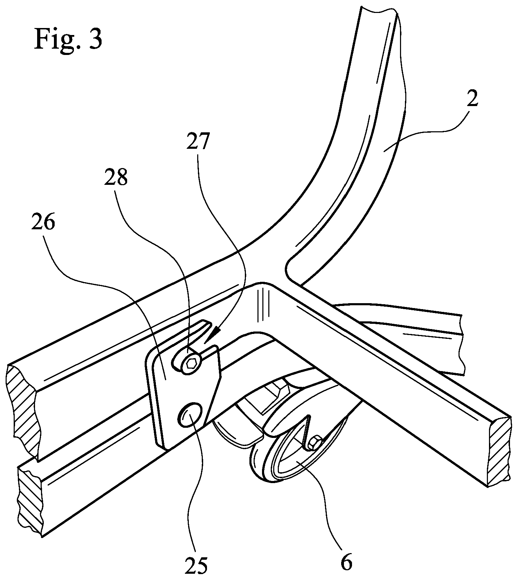

Aus der Figur 2 geht ein Transportwagen 7 zur Befestigung unterhalb des Fahrradträgers 1 als separates Einzelteil hervor. Dieser Transportwagen 7 weist einen sehr einfachen Aufbau auf und besteht hierbei lediglich aus einem Gestell, unter dem bei dem dargestellten Beispiel insgesamt vier Räder 6 montiert sind. Zur Verbindung des Transportwagens 7 mit dem Fahrradträger weist der Transportwagen 7 in diesem Fall zwei einander gegenüberliegend angeordnete Schwenkhebel 26 auf, deren Besonderheit darin besteht, dass sie jeweils um eine Achse 25 schwenkbar an dem Transportwagen 7 befestigt sind und im Bereich der Verbindung zum Fahrradträger 1 jeweils einen Schlitz 27 aufweisen, der einen korrespondierenden Fixierungsnocken 28 am Rahmen 2 des Fahrradträgers 1 aufnimmt, wenn der Fahrradträger 1 mit dem Transportwagen 7 verbunden ist. Dese einfache Art der Verbindung geht aus der Darstellung in Figur 3 hervor und bedeutet eine Art Schnelllösemechanismus. Selbstverständlich sind auch andere Verbindungsmöglichkeiten zwischen Transportwagen 7 und Fahrradträger 1 umsetzbar. So können hierfür beispielsweise auch Klemmverbindungen, Rastverbindungen oder Schnappverbindungen gewählt werden. Letztlich kommt es dabei lediglich auf die Möglichkeit an, den Transportwagen 7 ohne viel Aufwand mit dem Fahrradträger 1 zu verbinden beziehungsweise ihn vom Fahrradträger 1 zu lösen.

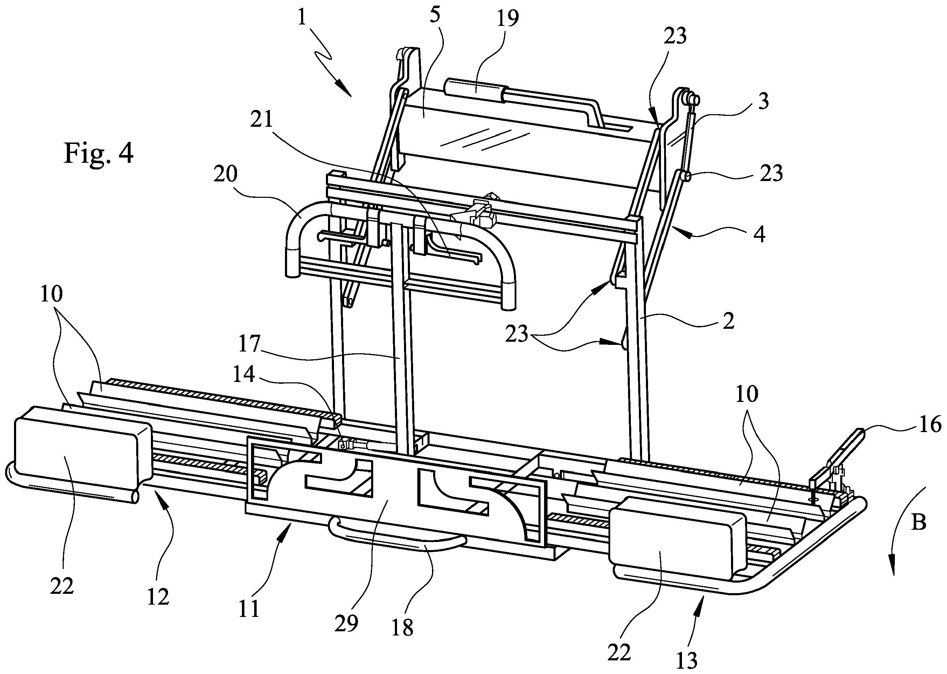

Aus der Figur 4 wird die eigentliche, erfindungswesentliche Funktion des Fahrradträgers 1 ersichtlich, die darin besteht, dass dieser mittels einer Relativbewegung zwischen Rahmen 2 und an der Anhängerkupplung des Kraftfahrzeuges befestigter Kupplungseinrichtung 5 bis auf den Untergrund absenkbar ist. Zur Umsetzung der Bewegung des Fahrradträgers 1 dient dabei in der zuvor bereits beschriebenen Weise die Hebelmechanik 4 mit Unterstützung der Gasdruckfedern 3. Wie aus der Figur 4 ferner ersichtlich wird, wurde in dieser bis auf den Untergrund abgesenkten Position der Transportwagen 7 vom Fahrradträger 1 entfernt. Die Bewegungsrichtung des Fahrradträgers 1 ist dabei in Figur 4 durch den Pfeil B symbolisiert.

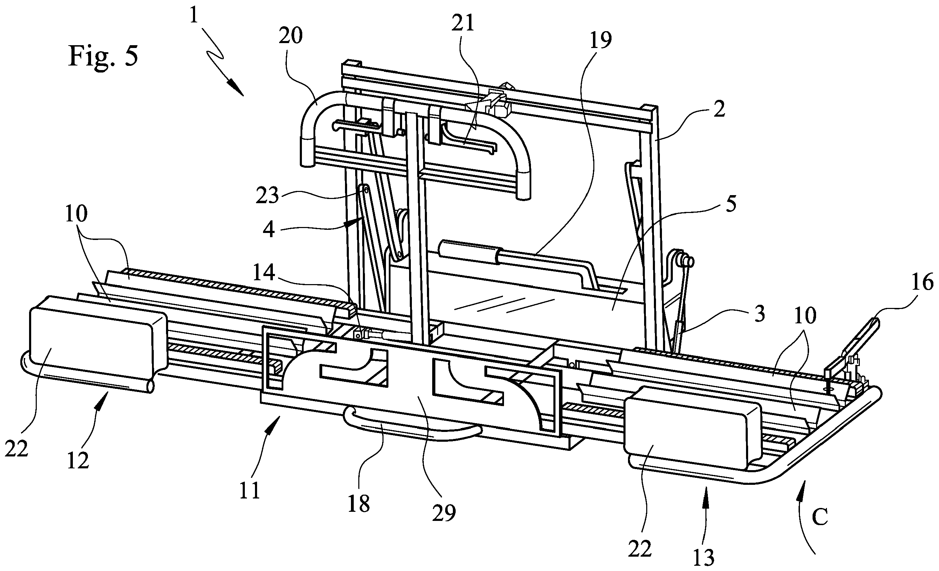

Im Unterschied hierzu zeigt die Figur 5 den Fahrradträger 1 aus den Figuren 1 und 4 in einer angehobenen Position. In dieser Lage ist der Transport wenigstens eines Fahrrades auf dem Fahrradträger 1 mit einem Kraftfahrzeug möglich. Das Fahrrad ist aus Vereinfachungsgründen in der Figur 5 nicht gezeigt.

Eine weitere Besonderheit eines erfindungsgemäßen Fahrradträgers 1 geht aus der Darstellung in Figur 6 hervor. Die darin gezeigte Ausführungsvariante eines Fahrradträgers 1 weist einen Rahmen 2 auf, der in seinem horizontalen, das wenigstens eine Fahrrad aufnehmenden Teil, aus einem Zentralrahmen 11 und zwei seitlich am Zentralrahmen 11 angeordneten Seitenrahmen 12 und 13 besteht. Dabei sind die Seitenrahmen 12 und 13 jeweils schwenkbar mit dem Zentralrahmen 11 verbunden, was dazu führt, dass der Fahrradträger 1 zusammengeklappt werden kann. In Figur 6 ist nur der im rechten Bildteil gezeigte Seitenrahmen 13 in Richtung des Pfeils D verschwenkt dargestellt. Durch die Schwenkbarkeit der Seitenrahmen 12, 13 wird eine sehr Platz sparende Aufbewahrung möglich, wenn kein Fahrrad im Fahrradträger 1 aufgenommen ist. Zur Unterstützung der Schwenkbewegung der Seitenrahmen 12, 13 dienen auch in diesem Fall Gasdruckfedern 14 beziehungsweise 15.

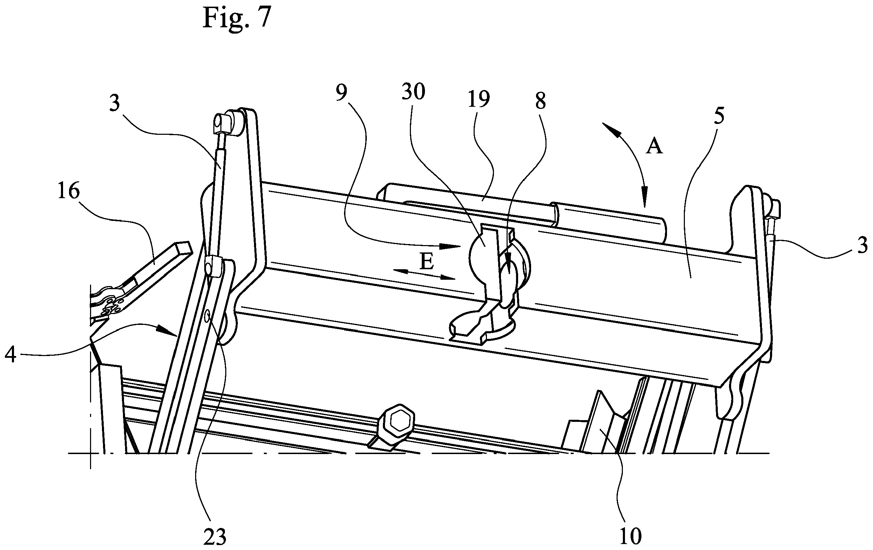

Die Figur 7 zeigt ausschnittsweise den Bereich einer Kupplungseinrichtung 5 eines Fahrradträgers 1 von der Seite der Anhängerkupplung her betrachtet. Die Kupplungseinrichtung 5 weist dabei eine Kupplungsöffnung 8 auf, deren Geometrie der Gestalt der Anhängerkupplung eines Kraftfahrzeuges angepasst ist, was bedeutet, dass durch eine horizontale Annäherung der Kupplungseinrichtung 5 an die Anhängerkupplung des Kraftfahrzeuges bei einer zuvor erfolgten Höhenjustierung der gesamte Fahrradträger 1 mit dem darunter montierten Transportwagen 7 unmittelbar auf die Anhängerkupplung aufgeschoben werden kann, ohne dass ein kraftaufwändiges Anheben oder Absenken des Fahrradträgers 1 erforderlich ist. Dieser wesentliche Vorteil lässt sich durch die Gestaltung der Kupplungsöffnung 8 in der zuvor bezeichneten Weise einfach realisieren. Innerhalb der Kupplungsöffnung 8 ist darüber hinaus ein Klemm- und/oder Schraubmechanismus 9 angeordnet, der über den Klemmhebel 19 betätigt wird. Wie aus der Figur 7 hervorgeht, weist der Klemm- und/oder Schraubmechanismus 9 einen die Kupplungsöffnung 8 freigebenden oder sperrenden und hierzu in Richtung des Doppelpfeils E bewegbaren Kolben 30 auf, der damit zusammen mit dem Klemmhebel 19 das Kernstück des Klemm- und/oder Schraubmechanismus 9 bildet.

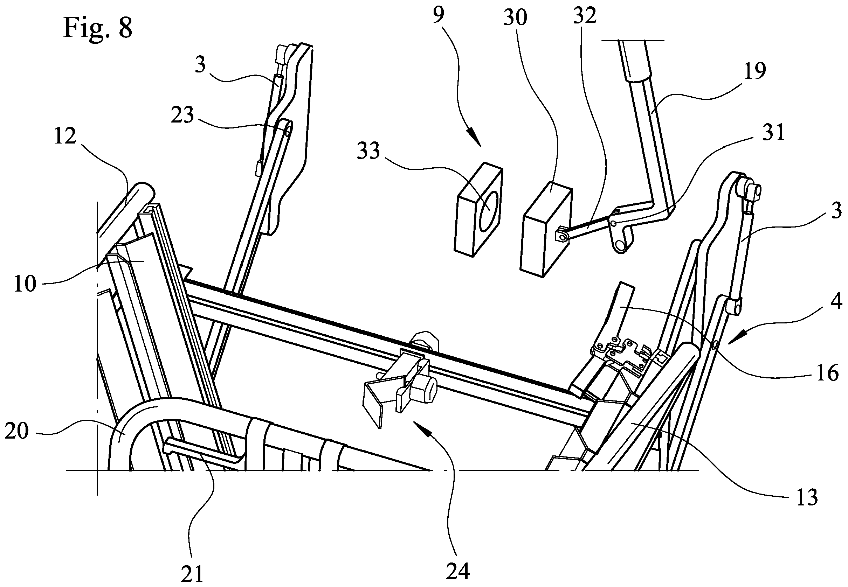

Bei der in Figur 8 gezeigten Explosivdarstellung des Klemm- und/oder Schraubmechanismus 9 wurde vorliegend aus Vereinfachungsgründen die Kupplungseinrichtung 5 nicht dargestellt. Auf diese Weise ist der Kolben 30 und sein Gegenstück, ein Widerlager 33 mit einer darin eingebrachten Kugelausnehmung zur Aufnahme der Kugel der Anhängerkupplung sichtbar. Auf der dem Widerlager 33 gegenüberliegenden Seite des Kolbens 30 ist dieser über einen Hebel 32 gelenkig mit dem Klemmhebel 19 verbunden, so dass eine Verschwenkung des Klemmhebels 19 um die Achse 31 zu einer Bewegung des Kolbens 30 in Richtung Widerlager 33 führt. Auf diese Weise wird die an der Anhängerkupplung des Kraftfahrzeuges vorhandene Kugel zwischen dem Kolben 30 und dem Widerlager 33 eingeklemmt und damit der gesamte Fahrradträger 1 an der Anhängerkupplung fixiert. Selbstverständlich können in an sich bekannter Weise auch noch zusätzliche Schraubfixierungen zur Vermeidung von Seitwärtsbewegungen an dem Fahrradträger 1 vorgesehen werden. Diese sind jedoch in der Figur 8 nicht gezeigt.

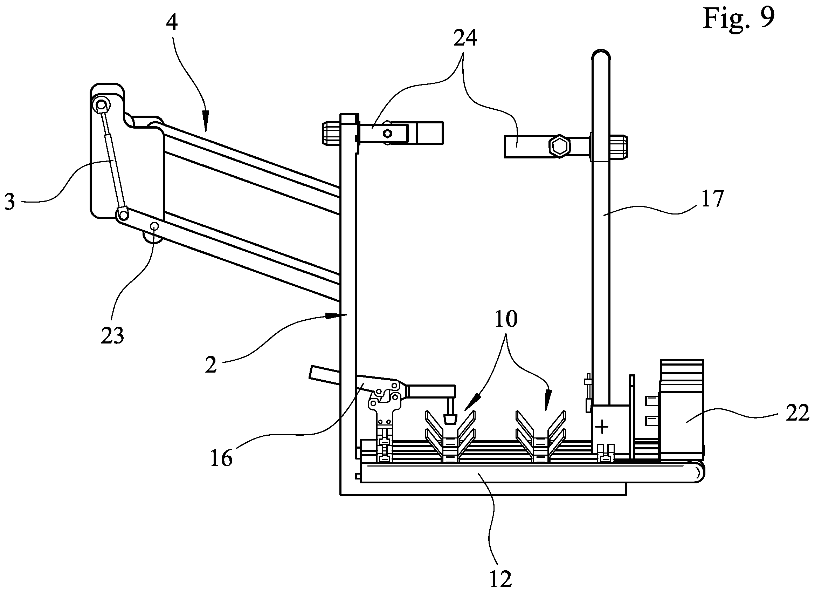

Aus der Figur 9 geht ein Fahrradträger 1 in einer Seitenansicht mit einem Stützarm 17 hervor. Sowohl am Rahmen 2, als auch am Stützarm 17 sind in einer aufeinander zu gerichteten Weise jeweils Fahrradklemmhalter 24 vorhanden, die zur Befestigung je eines in dem Fahrradträger 1 aufgenommenen Fahrrades dienen. Der Fahrradträger 1 weist in der zuvor bereits beschriebenen Weise auch Radaufnahmen 10 auf, in die jeweils die Räder des zu fixierenden Fahrrades eingesetzt werden. Zur Befestigung der Räder des Fahrrades dienen dabei die Schnellspannhebel 16, von denen in der Figur 9 lediglich beispielhaft ein einziger Schnellspannhebel 16 dargestellt ist. Aus der Figur 9 geht darüber hinaus noch einmal sehr deutlich die Ausführung der aus einer parallelogrammartigen Verbindung einzelner Hebelarme gestaltete Hebemechanik 4 hervor, die um Gelenke 23 schwenkbar miteinander gekoppelt sind und zu deren Bewegungsunterstützung jeweils Gasdruckfedern 3 dienen.

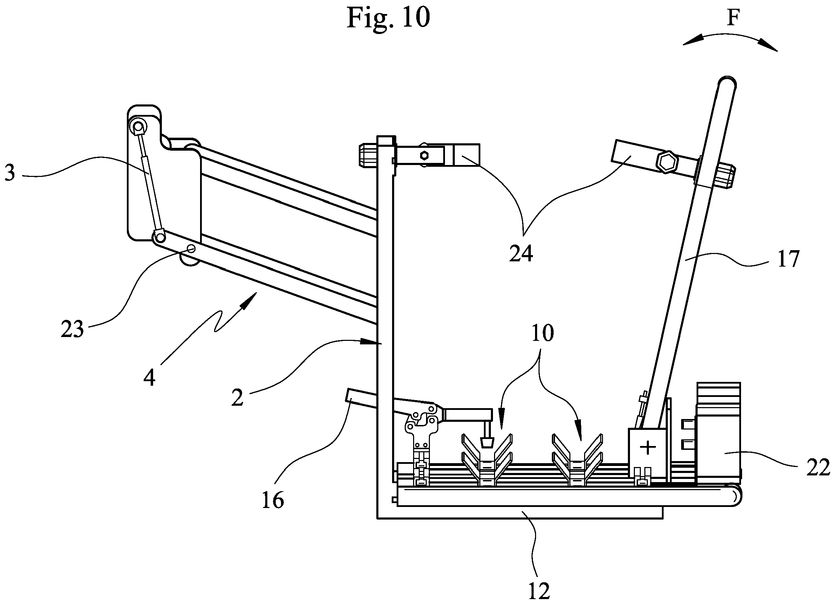

Wie dies deutlicher aus der Figur 10 hervorgeht, die den Fahrradträger 1 aus Figur 9 zeigt, ist der Stützarm 17 um eine nicht näher bezeichnete Achse schwenkbar in dem Fahrradträger 1 aufgenommen. Die Schwenkbarkeit erleichtert das Einführen eines Fahrrades in den Fahrradträger 1 beziehungsweise dessen Entnahme aus dem Fahrradträger 1. Es bedarf an dieser Stelle keiner besonderen Erwähnung, dass der Schwenkarm 17 in den einzelnen Schwenkpositionen fixierbar ist. Hierzu kann eine einfache Steckverbindung oder Stiftverbindung dienen. In der Figur 10 ist zwar eine Ausführungsvariante gezeigt, bei der der Stützarm 17 auf der der Anhängerkupplung abgewandten Rückseite des Fahrradträgers 1 schwenkbar angeordnet wurde. Neben dieser Lösung besteht jedoch auch die Möglichkeit, den Stützarm 17 ausschließlich oder zusätzlich zwischen den Radaufnahmen 10 vorzusehen.

### BEZUGSZEICHENLISTE:

- 1: Fahrradträger
- 2: Rahmen
- 3: Gasdruckfeder
- 4: Hebelmechanik
- 5: Kupplungseinrichtung
- 6: Räder / Rollen
- 7: Transportwagen
- 8: Kupplungsöffnung
- 9: Klemm- und/oder Schraubmechanismus
- 10: Radaufnahme
- 11: Zentralrahmen
- 12: Seitenrahmen
- 13: Seitenrahmen
- 14: Gasdruckfeder
- 15: Gasdruckfeder
- 16: Schnellspannhebel
- 17: Stützarm
- 18: Griff
- 19: Klemmhebel
- 20: Bügel
- 21: Handhebel
- 22: Rücklicht
- 23: Gelenk
- 24: Fahrradklemmhalter
- 25: Achse
- 26: Schwenkhebel
- 27: Schlitz
- 28: Fixierungsnocken

### FORTSETZUNG BEZUGSZEICHENLISTE:

- 29: Kennzeichenhalter
- 30: Kolben
- 31: Achse
- 32: Hebel
- 33: Widerlager mit Kugelausnehmung

## Patentansprüche

1. Verfahren zum Beladen eines an der Anhängerkupplung eines Kraftfahrzeuges lösbar befestigten Fahrradträgers (1) mit wenigstens einem Fahrrad, wobei der Fahrradträger (1) einen Rahmen (2) aufweist, der mittels einer durch wenigstens eine Gasdruckfeder (3) unterstützten Hebelmechanik (4) in Relation zu einer am Fahrradträger (1) vorhandenen Kupplungseinrichtung (5) zwischen einer Transportposition und einer Beladeposition schwenkbar ausgeführt ist,
**gekennzeichnet durch** folgende Verfahrensschritte:
- lösbare Fixierung eines mit Rädern (6) oder Rollen ausgestatteten Transportwagens (7) unterhalb des Fahrradträgers (1),
- Annäherung des Fahrradträgers (1) mit dem Transportwagen (7) an die Anhängerkupplung des Kraftfahrzeuges,
- Justierung der Kupplungseinrichtung (5) auf ein der Anhängerkupplung entsprechendes Höhenniveau, sodass die Kupplungseinrichtung (5) mit ihrer Kupplungsöffnung (8) durch horizontales Verfahren des mit dem Transportwagen (7) verbundenen Fahrradträgers (1) die Anhängerkupplung unmittelbar aufnimmt,
- Fixierung des Fahrradträgers (1) an der Anhängerkupplung mittels eines vorhandenen Klemm- und/oder Schraubmechanismus (9),
- Lösen und Entfernen des Transportwagens (7) vom Fahrradträger (1),
- Absenken des Rahmens (2) mittels der Hebelmechanik (4) bis auf den Untergrund,
- Einschieben des mindestens einen Fahrrades in die hierfür am Fahrradträger (1) vorhandene, wenigstens eine Radaufnahme (10) und Fixierung des Fahrrades in beziehungsweise an dem Fahrradträger (1),
- Anhebung des Rahmens (2) des Fahrradträgers (1) in die Transportposition mittels der vorhandenen Hebelmechanik (4).

2. Verfahren zur Entnahme wenigstens eines Fahrrad aus einem an der Anhängerkupplung eines Kraftfahrzeuges lösbar befestigten Fahrradträger (1), wobei der Fahrradträger (1) einen Rahmen (2) aufweist, der mittels einer durch wenigstens eine Gasdruckfeder (3) unterstützten Hebelmechanik (4) in Relation zu einer am Fahrradträger (1) vorhandenen Kupplungseinrichtung (5) zwischen einer Transportposition und einer Entnahmeposition schwenkbar ausgeführt ist,
**gekennzeichnet durch** folgende Verfahrensschritte:
- Absenken des Rahmens (2) des Fahrradträgers (1) mittels der Hebelmechanik (4) bis auf den Untergrund,
- Lösen und Entfernen des mindestens einen Fahrrades aus einer wenigstens einen hierfür am Fahrradträger (1) vorhandenen Radaufnahme (10),
- Anheben des Rahmens (2) des Fahrradträgers (1) mittels der Hebelmechanik (4) auf ein Höhenniveau, das die lösbare Fixierung eines mit Rädern (6) oder Rollen ausgestatteten Transportwagens (7) unterhalb des Fahrradträgers (1) ermöglicht,
- Absenkung des Rahmens (2) des Fahrradträgers (1) mit dem Transportwagen (7) auf den Untergrund,
- Lösen und Entfernung des Fahrradträgers (1) mit dem Transportwagen (7) von der Anhängerkupplung des Kraftfahrzeuges, wobei der Klemm- und/oder Schraubmechanismus (9) geöffnet und die an dem Fahrradträger (1) vorhandene Kupplungseinrichtung (5) durch horizontales Verfahren von der Anhängerkupplung getrennt wird.

3. Verfahren zur Entnahme eines ein Fahrrad aufnehmenden Fahrradträgers (1) von der Anhängerkupplung eines Kraftfahrzeuges, wobei der Fahrradträger (1) einen Rahmen (2) aufweist, der mittels einer durch wenigstens eine Gasdruckfeder (3) unterstützten Hebelmechanik (4) in Relation zu einer am Fahrradträger (1) vorhandenen Kupplungseinrichtung (5) zwischen einer Transportposition und einer Entnahmeposition schwenkbar ausgeführt ist,
**gekennzeichnet durch** folgende Verfahrensschritte:
- Absenken des Rahmens (2) des Fahrradträgers (1) mittels der Hebelmechanik (4) auf ein Höhenniveau, das die lösbare Fixierung eines mit Rädern (6) oder Rollen ausgestatteten Transportwagens (7) unterhalb des Fahrradträgers (1) ermöglicht,
- Absenkung des Rahmens (2) des Fahrradträgers (1) mit dem Transportwagen (7) auf den Untergrund,
- Lösen eines Klemm- und/oder Schraubmechanismus (9) und Entfernen des Fahrradträgers (1) mit dem wenigstens einen darin aufgenommenen Fahrrad und dem unter dem Fahrradträger (1) angeordneten Transportwagen (7) von der Anhängerkupplung des Kraftfahrzeuges, wobei die an dem Fahrradträger (1) vorhandene Kupplungseinrichtung (5) durch horizontales Verfahren von der Anhängerkupplung getrennt wird.

4. Fahrradträger mit einem Transportwagen zur Anwendung der Verfahren nach einem der vorstehend genannten Ansprüche,
**dadurch gekennzeichnet, dass**
der Fahrradträger (1) einen Rahmen (2) aufweist, an dem eine durch wenigstens eine Gasdruckfeder (3) unterstützte, schwenkbar ausgeführte, parallelogrammartige Hebelmechanik (4) angeordnet ist, mittels derer der Rahmen (2) von einer Transportposition in eine Belade- oder Entnahmeposition und umgekehrt in Relation zu einer Kupplungseinrichtung (5) bewegbar und der Fahrradträger (1) mittels einer Spanneinheit oder eines Rast- oder Klemmmechanismus (26, 27, 28) zu Transportzwecken lösbar mit einem mit Rädern (6) oder Rollen ausgestatteten Transportwagen (7) koppelbar ist.

5. Fahrradträger nach Anspruch 4,
**dadurch gekennzeichnet, dass**
die Kupplungseinrichtung (5) eine zur Anhängerkupplung des Kraftfahrzeuges passende Kupplungsöffnung (8) mit einem Klemm- und/oder Schraubmechanismus (9) aufweist.

6. Fahrradträger nach Anspruch 4 oder 5,
**dadurch gekennzeichnet, dass**
der Fahrradträger (1) Radaufnahmen (10) zur Fixierung der Räder eines in dem Fahrradträger aufgenommenen Fahrrades aufweist.

7. Fahrradträger nach Anspruch 6,
**dadurch gekennzeichnet, dass**
die Radaufnahmen (10) jeweils einen als Nocken- oder Kniehebel ausgeführten Schnellspannhebel (16) zur Fixierung der Räder eines in dem Fahrradträger aufgenommenen Fahrrades aufweisen.

8. Fahrradträger nach einem der Ansprüche 4 bis 7,
**dadurch gekennzeichnet, dass**
der Rahmen (2) des Fahrradträgers (1) aus einem Zentralrahmen (11) und wenigstens einem seitlich des Zentralrahmens (11) zwischen einer horizontalen und einer vertikalen Position schwenkbar an diesem angeordneten Seitenrahmen (12, 13) besteht.

9. Fahrradträger nach Anspruch 8,
**dadurch gekennzeichnet, dass**
zur Unterstützung der Schwenkbewegung des wenigstens einen Seitenrahmens (12, 13) je Seitenrahmen (12, 13) mindestens eine Gasdruckfeder (14, 15) vorhanden ist.

10. Fahrradträger nach einem der Ansprüche 4 bis 9,
**dadurch gekennzeichnet, dass**
der Fahrradträger (1) auf seiner dem Kraftfahrzeug abgewandten Rückseite und/oder mittig zwischen zwei benachbart zueinander angeordneten Radaufnahmen (10) einen schwenkbar gelagerten Stützarm (17) aufweist.

11. Fahrradträger nach einem der Ansprüche 4 bis 10,
**dadurch gekennzeichnet, dass**
der Fahrradträger (1) auf seiner dem Kraftfahrzeug abgewandten Rückseite einen Griff (18) aufweist.

## Claims

1. Method for loading a bicycle carrier (1) detachably attached to the trailer coupling of a motor vehicle with at least one bicycle, wherein the bicycle carrier (1) has a frame (2) which is designed to be pivotable by means of a lever mechanism (4) supported by at least one gas pressure spring (3) in relation to a coupling device (5) present on the bicycle carrier (1) between a transport position and a loading position,
**characterized by** the following method steps:
- releasable fixing of a trolley (7) equipped with wheels (6) or rollers underneath the bicycle carrier (1),
- approximation of the bicycle carrier (1) with the transport carriage (7) to the trailer coupling of the motor vehicle,
- adjustment of the coupling device (5) to a height level corresponding to the trailer coupling, so that the coupling device (5) with its coupling opening (8) directly receives the trailer coupling by horizontal movement of the bicycle carrier (1) connected to the transport carriage (7),
- fixing the bicycle carrier (1) to the trailer coupling by means of an existing clamping and/or screwing mechanism (9),
- release and remove the trolley (7) from the bicycle carrier (1),
- lowering the frame (2) to the ground using the lever mechanism (4),
- sliding the at least one bicycle into the at least one wheel holder (10) provided for this purpose on the bicycle carrier (1) and fixing the bicycle in or on the bicycle carrier (1),
- lifting the frame (2) of the bicycle carrier (1) into the transport position by means of the existing lever mechanism (4).

2. Method for removing at least one bicycle from a bicycle carrier (1) detachably attached to the trailer coupling of a motor vehicle, wherein the bicycle carrier (1) has a frame (2) which is designed to be pivotable between a transport position and a removal position by means of a lever mechanism (4) supported by at least one gas pressure spring (3) in relation to a coupling device (5) present on the bicycle carrier (1), **characterized by** the following method steps:
- lowering the frame (2) of the bicycle carrier (1) by means of the lever mechanism (4) onto the ground,
- release and removal of the at least one bicycle from at least one wheel holder (10) provided for this purpose on the bicycle carrier (1),
- lifting of the frame (2) of the bicycle carrier (1) by means of the lever mechanism (4) to a height level which allows the detachable fixing of a trolley (7) equipped with wheels (6) or rollers below the bicycle carrier (1),
- lowering of the frame (2) of the bicycle carrier (1) with the transport trolley (7) onto the ground,
- release and removal of the bicycle carrier (1) with the transport carriage (7) from the trailer coupling of the motor vehicle, wherein the clamping and/or screw mechanism (9) is opened and the coupling device (5) present on the bicycle carrier (1) is separated from the trailer coupling by horizontal movement.

3. Method for removing a bicycle carrier (1), which accommodates a bicycle, from the trailer coupling of a motor vehicle, wherein the bicycle carrier (1) has a frame (2) which is designed to be pivotable by means of a lever mechanism (4), which is supported by at least one gas pressure spring (3), in relation to a coupling device (5) present on the bicycle carrier (1) between a transport position and a removal position,
**characterized by** the following method steps:
- lowering the frame (2) of the bicycle carrier (1) by means of the lever mechanism (4) to a height level which allows the detachable fixing of a transport carriage (7) equipped with wheels (6) or rollers below the bicycle carrier (1),
- lowering the frame (2) of the bicycle carrier (1) with the transport trolley (7) onto the ground,
- releasing a clamping and/or screwing mechanism (9) and removing the bicycle carrier (1) with the at least one bicycle accommodated therein and the transport carriage (7) arranged under the bicycle carrier (1) from the trailer coupling of the motor vehicle, wherein the coupling device (5) present on the bicycle carrier (1) is separated from the trailer coupling by horizontal movement.

4. Bicycle carrier with a transport carriage for the application of the methods according to one of the preceding claims,
**characterized in that**
the bicycle carrier (1) has a frame (2) on which a pivotably designed, parallelogram-shaped lever mechanism (4) supported by at least one gas pressure spring (3) is arranged, by means of which the frame (2) can be moved from a transport position into a loading or unloading position and vice versa in relation to a coupling device (5) and the bicycle carrier (1) can be releasably coupled for transport purposes to a transport carriage (7) equipped with wheels (6) or rollers by means of a tensioning unit or a latching or clamping mechanism.

5. Bicycle carrier according to claim 4,
**characterized in that**
the coupling device (5) has a coupling opening (8) with a clamping and/or screwing mechanism (9) which matches the trailer coupling of the motor vehicle.

6. Bicycle carrier according to claim 4 or 5,
**characterized in that**
the bicycle carrier (1) has wheel receivers (10) for fixing the wheels of a bicycle received in the bicycle carrier.

7. Bicycle carrier according to claim 6,
**characterized in that**
the wheel holders (10) each have a quick-release lever (16) designed as a cam or toggle lever for fixing the wheels of a bicycle received in the bicycle carrier.

8. Bicycle carrier according to one of claims 4 to 7,
**characterized in that**
the frame (2) of the bicycle carrier (1) consists of a central frame (11) and at least one side frame (12, 13) that is pivotable between a horizontal and a vertical position arranged on the central frame (11).

9. Bicycle carrier according to claim 8,
**characterized in that**
at least one gas pressure spring (14, 15) is provided per side frame (12, 13) to support the pivoting movement of the at least one side frame (12, 13).

10. Bicycle carrier according to one of claims 4 to 9,
**characterized in that**
the bicycle carrier (1) has a pivotably mounted support arm (17) on its rear side facing away from the motor vehicle and/or centrally between two wheel receivers (10) arranged adjacent to one another.

11. Bicycle carrier according to any of claims 4 to 10,
**characterized in that**
the bicycle carrier (1) has a handle (18) on its rear side facing away from the motor vehicle

## Revendications

1. Procédé de chargement d'un porte-vélos (1) attaché d'une manière détachable à l'attelage d'un véhicule automobile avec au moins un vélo et ce porte-vélos (1) est doté d'un cadre (2) qui présente au moyen d'au moins un ressort à gaz (3) lequel soutient le mécanisme à levier (4) en relation avec un dispositif d'accouplement (5) présente sur le porte-vélos (1) qui peut pivoter entre une position de transport et une position de chargement, **caractérisé par** les étapes suivantes du procédé :
- une fixation détachable avec des roues (6) ou des rouleaux qui sont fixés au chariot de transport (7) sous le porte-vélos (1),
- approche du porte-vélos (1) avec le chariot de transport (7) à l'attelage du véhicule automobile,
- ajustement du dispositif d'accouplement (5) au niveau de hauteur correspondant à celui de l'attelage de manière que le dispositif d'accouplement (5) avec son ouverture d'attelage (8) absorbe directement l'attelage par le mouvement horizontal du porte-vélos (1) relié au chariot de transport (7)
- fixation du porte-vélos (1) à l'attelage au moyen d'un système de serrage et/ ou un mécanisme de vis (9) existant,
- desserrage et démontage du chariot de transport (7) du porte-vélos (1),
- abaisser le cadre (2) au sol au moyen du mécanisme à levier (4),
- insertion au moins un vélo sur les dispositifs prévus sur le porte-vélos (1), au moins un support de roue (10) et fixation du vélo dans ou sur le porte-vélos (1),
- relèvement du cadre (2) du porte-vélos (1) en position de transport au moyen du mécanisme à levier (4) existant.

2. Procédé de prélèvement au moins un vélo d'un porte-vélos (1) attaché d'une manière détachable à l'attelage d'un véhicule automobile et ce porte-vélos (1) est doté d'un cadre (2) qui présente au moyen d'au moins un ressort à gaz (3) lequel soutient le mécanisme à levier (4) en relation avec un dispositif d'accouplement (5) présente sur le porte-vélos (1) qui peut pivoter entre une position de transport et une position de prélèvement, **caractérisé par** les étapes suivantes du procédé :
- abaisser le cadre (2) du porte-vélos (1) au sol au moyen du mécanisme à levier (4)
- desserrage et démontage au minimum un vélo d'au moins un support de roue (10) prévu sur le porte-vélos (1),
- relever le cadre (2) du porte-vélos (1) au moyen du mécanisme à levier (4) jusqu'à un niveau de hauteur permettant la fixation détachable d'un chariot de transport (7) équipé de roues ou de roulettes sous le porte-vélos,
- abaissement du cadre (2) du porte-vélos (1) avec le chariot de transport (7) au sol,
- desserrage et démontage du porte-vélos (1) de l'attelage du véhicule automobile avec le chariot de transport (7) et un système de serrage et/ ou un mécanisme de vis (9) est ouvert et le dispositif d'attelage (5) prévu sur le porte-vélos (1) est séparé de l'attelage par un mouvement horizontal.

3. Procédé de prélèvement d'un porte-vélos (1) qui peut transporter un vélo d'attelage d'un véhicule automobile et le porte-vélos (1) est doté d'un cadre (2) qui présente au moyen d'au moins un ressort à gaz (3) lequel soutient le mécanisme à levier (4) en relation avec un dispositif d'accouplement (5) présente sur le porte-vélos (1) qui peut pivoter entre une position de transport et une position de prélèvement, **caractérisé par** les étapes suivantes du procédé :
- abaisser le cadre (2) du porte-vélos (1) au moyen du mécanisme à levier (4) jusqu'à un niveau de hauteur permettant la fixation détachable d'un chariot de transport (7) équipé de roues (6) et/ ou roulettes sous le porte-vélos (1),
- abaissement du cadre (2) du porte-vélos (1) avec le chariot de transport (7) au sol,
- desserrage d'un système de serrage et/ ou d'un mécanisme de vis (9) et démontage du porte-vélos (1) contenant au moins un vélo et du chariot de transport (7) qui se trouve sous le porte-vélos (1) et le dispositif d'attelage (5) prévu sur le porte-vélos est supérieur de l'attelage par un mouvement horizontal.

4. Porte-vélos (1) avec une chariot de transport pour l'application des procédé selon l'une quelconque des revendications précédentes, **caractérisé par le fait que** le porte-vélos (1) est doté d'un cadre (2) qui présente au moins un ressort à gaz (3) lequel soutient mécanisme à levier (4) qui est en forme de parallélogramme pivotant et soutenu, au moyen duquel le cadre (2) peut être déplacé d'une position de transport à une position de chargement ou de prélèvement en relation avec un dispositif d'accouplement (5) et le porte-vélos (1) peut être couplé de manière détachable à un chariot de transport (7) équipé de roues (6) ou de rouleaux au moyen d'une unité de serrage ou d'un mécanisme d'enclenchement ou d'un système de serrage pour des raisons de transport.

5. Porte-vélos selon la revendication 4, **caractérisé par** le dispositif d'attelage (5) qui présente une ouverture d'attelage (8) qui correspondant à l'attelage du véhicule automobile équipé avec un mécanisme de serrage et/ ou un mécanisme de vis (9).

6. Porte-vélos selon la revendication 4 ou 5, **caractérisé par le fait que** le porte-vélos (1) présente des supports de roue (10) pour la fixation des roues d'un vélo logé dans le porte-vélos.

7. Porte-vélos selon la revendication 6, **caractérisé par le fait que** les supports de roue (10) ont chacun un levier de serrage rapide effectué comme un levier à came ou un levier basculant pour fixer les roues d'un vélo logé dans le porte-vélos.

8. Porte-vélos selon la revendication 4 à 7, **caractérisé par le fait que** le cadre (2) du porte-vélos (1) peut pivoter entre une position horizontale et une position verticale et se compose d'un châssis central (11) et d'au moins un cadre latéral (12, 13) disposé sure le côté du châssis central (11).

9. Porte-vélos selon la revendication 8, **caractérisé par le fait que** pour soutenir le mouvement de pivotement d'au moins un cadre latéral (12, 13) par cadre latéral (12, 13) et un au moins un ressort à gaz (18) est prévu.

10. Porte-vélos selon la revendication 4 à 9, **caractérisé par le fait que** le porte-vélos (1) présente un bras de support (17) pivotante sur sa face arrière tournée à l'opposé du véhicule automobile et/ ou au milieu entre deux supports de roue (10).

11. Porte-vélos selon la revendication 4 à 10, **caractérisé par le fait que** le porte-vélos (1) présente une poignée (18) sur sa face arrière opposé au véhicule automobile.
